# EUROPEAN PATENT SPECIFICATION

(11) **EP 4 418 232 B1**
(45) Date of publication and mention of the grant of the patent: **11.02.2026**
(21) Application number: 21960676.1
(22) Date of filing: 15.10.2021
(51) Int. Cl.: G01C 21/34, G01C 21/00, G08G 1/0968

(54) **INFORMATION PROCESSING METHOD AND INFORMATION PROCESSING DEVICE**
INFORMATIONSVERARBEITUNGSVERFAHREN UND INFORMATIONSVERARBEITUNGSVORRICHTUNG
PROCÉDÉ DE TRAITEMENT D'INFORMATIONS ET DISPOSITIF DE TRAITEMENT D'INFORMATIONS

(43) Date of publication of application: 21.08.2024
(73) Proprietor: NISSAN MOTOR CO., LTD., Kanagawa 221-0023 (JP)
(72) Inventor: DOAN Thanh, Atsugi-shi, Kanagawa 243-0123 (JP); HAYASHI Yusuke, Atsugi-shi, Kanagawa 243-0123 (JP); SHINO Tatsuya, Atsugi-shi, Kanagawa 243-0123 (JP); YONEKAWA Iori, Atsugi-shi, Kanagawa 243-0123 (JP)
(74) Representative: Osha BWB
(86) International application number: PCT/JP2021/038245
(87) International publication number: WO 2023/062822

(56) References cited:
- WO-A1-2013/084281
- JP-A- 2010 043 964
- JP-A- H06 186 048
- US-A1- 2015 153 197
- US-A1- 2016 159 346
- US-A1- 2021 039 675

## Description

### TECHNICAL FIELD

The present invention relates to an information processing method and an information processing device.

### BACKGROUND ART

An automatic driving enable/disable notification system including a navigation device and a high-precision map information management device is proposed in Japanese Patent Laid-Open Publication No. 2018-189594 (hereafter "Patent Literature 1"). According to the automatic driving enable/disable notification system, a section corresponding to a high-precision map data is extracted from a traveling route that the vehicle is scheduled to travel, generated by the navigation device, and a driving route with higher accuracy than the traveling route is generated.

Patent document US 2021/0039675 A1 describes a path providing device and a path providing method for providing a path information to a vehicle. Patent documents US 2015/0153197 A1 and US 2016/0159346 A1 describe advanced driver assistance systems.

### SUMMARY OF INVENTION

### TECHNICAL PROBLEM

According to the technology described in Patent Literature 1, the high-precision map data possessed by the high-precision map information management device has higher accuracy than the map data possessed by the navigation device. Therefore, in order to extract the section corresponding to the high-precision map data from the traveling route, it is necessary to project the traveling route on the high-precision map data.

Here, there is a limit to the amount of data that can be held or processed by the navigation device and the high-precision map information management device, and the amount of data that can be transmitted from the navigation device to the high-precision map information management device per unit time.

Therefore, path information (road information of a target path, bifurcation information, vehicle position information) on the map data on the traveling route is transmitted from the navigation device to the high-precision map information management device. The high-precision map information management device projects the traveling route on the high-precision map data based on the transmitted path information.

However, when the navigation device reroutes to generate a new traveling route, the high-precision map information management device cannot project the traveling route onto the high-precision map data until the reroute is completed. As a result, when reroute is started, the problem arises that an autonomous driving control of the vehicle must be interrupted.

The present invention has been made in view of the above problems. An object of the present invention is to provide an information processing method and an information processing device capable of suppressing interruption of autonomous driving control of a vehicle even when a reroute to generate a new traveling route is started by a navigation device.

### SOLUTION TO PROBLEM

The invention aims at solving the above-described problems. An information processing method and an information processing device according to the invention are defined in the appended independent claims. Specific embodiments are defined in the dependent claims.

### ADVANTAGEOUS EFFECTS OF INVENTION

According to the present invention, even when a reroute to generate a new traveling route is started by a navigation device, interruption of autonomous driving control of a vehicle can be suppressed.

### BRIEF DESCRIPTION OF DRAWINGS

[Fig. 1] Fig. 1 is a block diagram showing a configuration of a vehicle driving support device including an information processing device according to an embodiment of the present invention.
[Fig. 2] Fig. 2 is a flowchart showing deletion process in the information processing device according to the embodiment of the present invention.
[Fig. 3] Fig. 3 is a diagram showing an example of a road network configured based on acquired path information.
[Fig. 4] Fig. 4 is a diagram showing an example in which path information is retained at the time of reroute.
[Fig. 5] Fig. 5 is a diagram showing an example in which path information is deleted by deletion process for main path at the time of reroute.
[Fig. 6] Fig. 6 is a diagram showing an example in which path information is deleted by deletion process for sub path at the time of reroute.

### DESCRIPTION OF EMBODIMENTS

Embodiments of the present invention will now be described in detail with reference to the drawings. In the explanation, the same reference numerals are given to the same parts, and redundant explanations are omitted.

### [Configuration of vehicle driving support device]

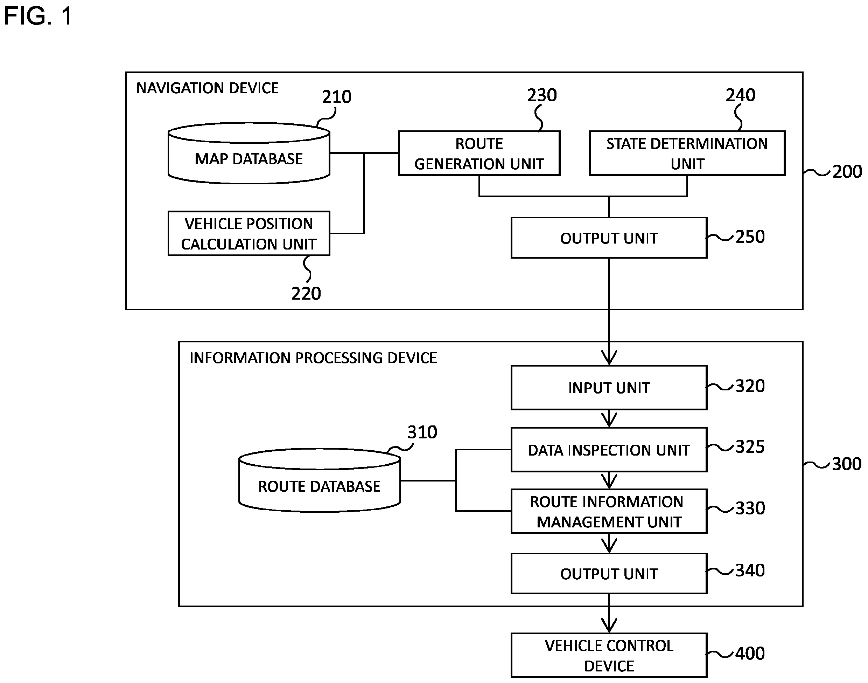

Fig. 1 is a block diagram showing a configuration of a vehicle driving support device including an information processing device according to this embodiment. As shown in Fig. 1, the vehicle driving support device includes a navigation device 200 and an information processing device 300. The navigation device 200 and the information processing device 300 are connected by a communication path such as CAN (Controller Area Network) and Ethernet. In addition, the vehicle driving support device may include a vehicle control device 400 that automatically controls traveling of the vehicle.

The navigation device 200 includes a controller (an example of a control unit or processing unit). The controller is a general-purpose microcomputer having a CPU (central processing unit), memory, and input/output unit. A computer program (navigation program) for functioning as the navigation device is installed in the controller. By executing the computer program, the controller functions as a plurality of information processing circuits (210, 220, 230, 240, 250).

Here, an example of implementing a plurality of information processing circuits (210, 220, 230, 240, 250) included in the navigation device 200 by software is shown. However, it is also possible to configure the information processing circuits (210, 220, 230, 240, 250) by preparing dedicated hardware for executing each information processing described below. Also, the plurality of information processing circuits (210, 220, 230, 240, 250) may be configured by individual hardware. Furthermore, the information processing circuits (210, 220, 230, 240, 250) may also be used as an electronic control unit (ECU) used for other vehicle-related controls.

The navigation device 200 includes a map database 210, a vehicle position calculation unit 220, a route generation unit 230, a state determination unit 240, and an output unit 250 as a plurality of information processing circuits (210, 220, 230, 240, 250).

The map database 210 stores map data necessary for a route search operation for calculating an optimal traveling route connecting a departure point and a destination point, and for a route guidance operation for guiding a vehicle along the traveling route obtained by the route search. The map data stored in the map database 210 defines a road network of an area where the vehicle travels.

For example, map data may include road information (information indicating road attributes such as curves, slopes, intersections, interchanges, narrow roads, straight roads, roadside structures, and speed limits). In addition, the map data may include bifurcation information (information indicating bifurcations, such as bifurcation points where lanes bifurcate, connection relationships between lanes at bifurcation points, routes such as right/left turns or straight ahead for each lane).

Note that the map data stored in the map database 210 does not require as much accuracy as the high-precision map information required for autonomous driving. The map database 210 is implemented by a hard disk device, a semiconductor memory, or a DVD and its reader. Alternatively, the map database 210 may be replaced with a communication device to obtain map data from an external map distribution server not shown.

The vehicle position calculation unit 220 calculates the position of the vehicle based on detection data output from a GPS receiver not shown, and executes map matching process to correct the position of the vehicle if the calculated position of the vehicle is not on the road of the map data. As an example, the GPS receiver is used to detect the position of the vehicle, but an autonomous navigation sensor using a direction sensor, a distance sensor, or the like may also be used to increase the detection accuracy.

The route generation unit 230 calculates the traveling route of the vehicle from the departure point to the destination point by route search process using designated search conditions, and newly creates the traveling route on the map data. Note that the traveling route generated by the route generation unit 230 may be one that minimizes the cost (traveling distance, traveling time, etc.) when the vehicle travels from the departure point to the destination point. The traveling route generated by the route generation unit 230 may be set based on an instruction from the vehicle occupant.

The state determination unit 240 sets a road network including roads within a predetermined range from the position of the vehicle among the road networks set on the map data as the target road network. The state determination unit 240 may set a traveling route within a predetermined range from the position of the vehicle among the traveling routes generated by the route generation unit 230, and a route bifurcating from the traveling route within the predetermined range, as the target road network.

Here, the "predetermined range" when setting the target road network may be determined based on the amount of data that the navigation device 200 and the information processing device 300 can hold or process. The "predetermined range" may be determined based on the amount of data that can be transmitted from the navigation device 200 to the information processing device 300 per unit time.

Moreover, the state determination unit 240 may update the target road network based on the position of the vehicle after traveling so that the predetermined range is maintained each time the vehicle travels.

Also, the state determination unit 240 may determine whether or not the target road network has been reset. For example, the state determination unit 240 may determine that the target road network has been reset when the traveling route of the vehicle is changed (rerouted) or when the navigation device 200 has just been activated.

The output unit 250 outputs information (path information) on paths included in the target road network set by the state determination unit 240. Here, the "path" means a route through the road network and on which the vehicle can travel. The output unit 250 outputs road information on the path and bifurcation information (information indicating a bifurcation) as path information. Alternatively, the output unit 250 may output position information (information indicating the position of the vehicle on the path) as path information based on the position of the vehicle acquired by the vehicle position calculation unit 220. That is, the path information output by the output unit 250 can include road information, bifurcation information, and position information.

For example, the output unit 250 outputs path information about the target road network based on ADASIS (Advanced Driver Assistance Systems Interface Specifications).

Here, ADASIS is a standard established to promote the development and application of predictive map-based driving assistance systems that support access to predictive road data, at the ADASIS Forum, which is held regularly with members representing the automobile industry.

In the path information conforming to ADASIS, the road shape (curve, intersection, slope) and the position of the road shape regarding the road on which the vehicle is scheduled to travel are output as a distance (offset) from the base point and latitude and longitude. Moreover, not only the vehicle speed and direction information of the vehicle but also road information such as regulated speed (speed limit) and road type are output together.

In the path information conforming to ADASIS, static information (road information) and dynamic information (for example, position information, signal information) regarding the road on which the vehicle is scheduled to travel are provided as list information sorted by offset from the base point on the road to 0. Among the paths (routes on which the vehicle can travel), the path on which the vehicle is most likely to travel is called the main path (MAIN PATH) (or MPP (Most Probable Path)). Among the paths, paths other than the main path are called sub path (SUB PATH).

The length of the main path is typically set on an order of several kilometers, but is not limited to this. Also, the length of the sub path is typically set to an order of about several hundred meters, but is not limited to this. The sub path is a path bifurcating from the main path, and the main path is longer than the sub path. In the following description, the main path may be referred to as the first path, and the sub path may be referred to as the second path.

Examples of message names indicating types of information transmitted in compliance with ADASIS include "POSITION", "SEGMENT", "STUB", "PROFILE SHORT", and "PROFILE LONG", etc.

For example, vehicle position information is sent by the "POSITION" message. The "POSITION" message includes information such as a path identification number (PID) identifying the path on which the vehicle is located, an offset (OFFSET) indicating the position of the vehicle on the path, and a lane on which the vehicle is traveling. Whether the path on which the vehicle is located is the main path or the sub path is identified by a path type.

For example, road information is transmitted by a "SEGMENT" message. The "SEGMENT" message includes a path identification number (PID) specifying a path, an offset (OFFSET) indicating the position of a predetermined point on the path, road attributes at the predetermined point (possibility of hands-off when driving a vehicle, speed limit, number of lanes, number of oncoming lanes, etc.). In addition, the road information may be transmitted by a "PROFILE SHORT" message or a "PROFILE LONG" message.

For example, the bifurcation information is sent by a "STUB" message. The "STUB" message includes information, such as a path identification number (PID) that identifies a bifurcation source path, an offset (OFFSET) that indicates the position of the bifurcation point, a bifurcation destination path identification number (bifurcation destination PID) that identifies the bifurcation destination path, and the like.

Each of the above messages includes message type (type of path information) information. Therefore, by referring to the message type, it is possible to identify which of the messages such as "POSITION", "SEGMENT", "STUB", "PROFILE SHORT", and "PROFILE LONG".

Thus, by referring to the path information output by the output unit 250, it is possible to identify whether the path information is road information, bifurcation information, or position information.

The output unit 250 scans the paths included in the target road network, and outputs the above-described messages and the like as path information. The direction in which the path is scanned is the traveling direction of the vehicle. Therefore, the path information about the paths included in the target road network ahead along the traveling direction of the vehicle is output by the output unit 250 along the direction from the side closer to the vehicle to the side farther from the vehicle.

In addition, when the state determination unit 240 determines that reroute has been performed, the output unit 250 outputs a "reroute request" signal indicating that reroute has started.

Next, the information processing device 300 includes a controller (an example of a control unit or processing unit). A computer program (information processing program) for functioning as the high-precision map information management device is installed in the controller. By executing the computer program, the controller functions as a plurality of information processing circuits (310, 320, 325, 330, 340).

Here, an example of implementing a plurality of information processing circuits (310, 320, 325, 330, 340) included in the information processing device 300 by software is shown. However, it is also possible to configure the information processing circuits (310, 320, 325, 330, 340) by preparing dedicated hardware for executing each information processing described below. Also, the plurality of information processing circuits (310, 320, 325, 330, 340) may be configured by individual hardware. Furthermore, the information processing circuits (310, 320, 325, 330, 340) may also be used as an electronic control unit (ECU) used for other vehicle-related controls.

The information processing device 300 includes a route database 310, an input unit 320, a data inspection unit 325, a route information management unit 330, and an output unit 340 as a plurality of information processing circuits (310, 320, 325, 330, 340).

The input unit 320 acquires the path information and the reroute request output by the output unit 250 of the navigation device 200. The reroute request may be included in the path information.

The data inspection unit 325 inspects the consistency of the path information acquired by the input unit 320. For example, the data inspection unit 325 may determine whether the acquired path information is in a format compliant with ADASIS, and the data inspection unit 325 may discard the acquired path information if it is determined that the format is not compliant.

The route database 310 (database) records the path information acquired by the input unit 320. The route database 310 may store the path information for each path, or may store the path information regarding a plurality of paths by queue management.

In addition, the route database 310 may store high-precision map data, which is high-definition map data required for autonomous driving, for example. The high-precision map data has higher precision than the map data stored in the map database 210. Also, the high-precision map data has more and more detailed map information than the map database 210.

As with the map database 210 provided in the navigation device 200, the route database 310 may be implemented by a hard disk device or semiconductor memory, or by a DVD and its reader. Further, the route database 310 may acquire the high-precision map data from an external map distribution server not shown via a communication device not shown.

The route information management unit 330 configures the target road network transmitted from the navigation device 200 based on the path information stored in the data inspection unit 325. In addition, the route information management unit 330 may extract the driving route corresponding to the constructed target road network from the high-precision map data stored in the route database 310. For example, the route information management unit 330 limits the range for searching for driving routes on the high-precision map data based on the vehicle position information, and may extract a driving route that have the same topology as the target road network, within the limited range.

Next, the configuration of the target road network by the route information management unit 330 will be described. For example, it is assumed that the path information shown in Table 1 below is stored in the route database 310.

**[Table 1]**

| INDEX | PID | path type | OFFSET | bifurcation destination PID | road information (hands-off) | type of path information |
|---|---|---|---|---|---|---|
| A1 | 8 | MAIN | 0 | - | OK | road information |
| A | 8 | MAIN | 100 | - | OK | position information |
| A3 | 8 | MAIN | 200 | 9 | OK | bifurcation information (source) |
| A4 | 8 | MAIN | 300 | 10 | OK | bifurcation information (source) |
| A5 | 8 | MAIN | 400 | - | OK | road information |
| B1 | 9 | SUB | 0 | - | OK | bifurcation information (destination) |
| B2 | 9 | SUB | 100 | - | OK | road information |
| B3 | 9 | SUB | 200 | - | OK | road information |
| C1 | 10 | SUB | 0 | - | OK | bifurcation information (destination) |
| C2 | 10 | SUB | 100 | - | OK | road information |
| C3 | 10 | SUB | 200 | 11 | OK | bifurcation information (source) |
| C4 | 10 | SUB | 300 | - | OK | road information |
| D1 | 11 | SUB | 0 | - | NG | bifurcation information |
| D2 | 11 | SUB | 100 | - | NG | road information |

According to Table 1, since there are four types of PID=8, 9, 10, and 11, it can be seen that four paths exist in the target road network. Here, the paths corresponding to PID=8, 9, 10 and 11 will be described as paths PA, PB, PC and PD.

It can be seen that the path information at each point on the path PA is stored in the order of INDEX=A1, A2, A3, A4, A5 corresponding to the path PA. Hereinafter, it is assumed that the reference numerals attached to the points shown on the drawings are the same as INDEX. It is also assumed that the path information is output from the output unit 250 in the order of the numbers added to the end of INDEX.

Here, since the type of the path information with INDEX=A2 is the position information, it can be seen that the vehicle exists at the point (OFFSET=100) represented by INDEX=A2. On the other hand, since the type of the path information of INDEX=A3 and A4 is the bifurcation information (source), it can be seen that paths PB and PC bifurcate from the points represented by INDEX=A3 and A4, respectively. The bifurcation destination of the path is identified by the bifurcation destination PID.

It can be seen that the path information at each point on the path PB is stored in the order of INDEX=B1, B2, B3 corresponding to the path PB. Here, since the type of the path information of INDEX=B1 is the bifurcation information (destination), it can be seen that the path PB starts from the point represented by INDEX=B 1.

It can be seen that the path information at each point on the path PC is stored in the order of INDEX=C1, C2, C3, C4 corresponding to the path PC. Here, since the type of the path information of INDEX=C1 is the bifurcation information (destination), it can be seen that the path PC starts from the point represented by INDEX=C1. Also, since the type of the path information of INDEX=C3 is the bifurcation information (source), it can be seen that the path PD bifurcates from the point represented by INDEX=C3. The bifurcation destination of the path is identified by the bifurcation destination PID.

It can be seen that the path information at each point on the path PD is stored in the order of INDEX=D1, D2 corresponding to the path PD. Here, since the type of the path information of INDEX=D1 is the bifurcation information (destination), it can be seen that the path PD starts from the point represented by INDEX=D1.

In addition, the path information whose type of the path information is road information is also stored in the route database 310.

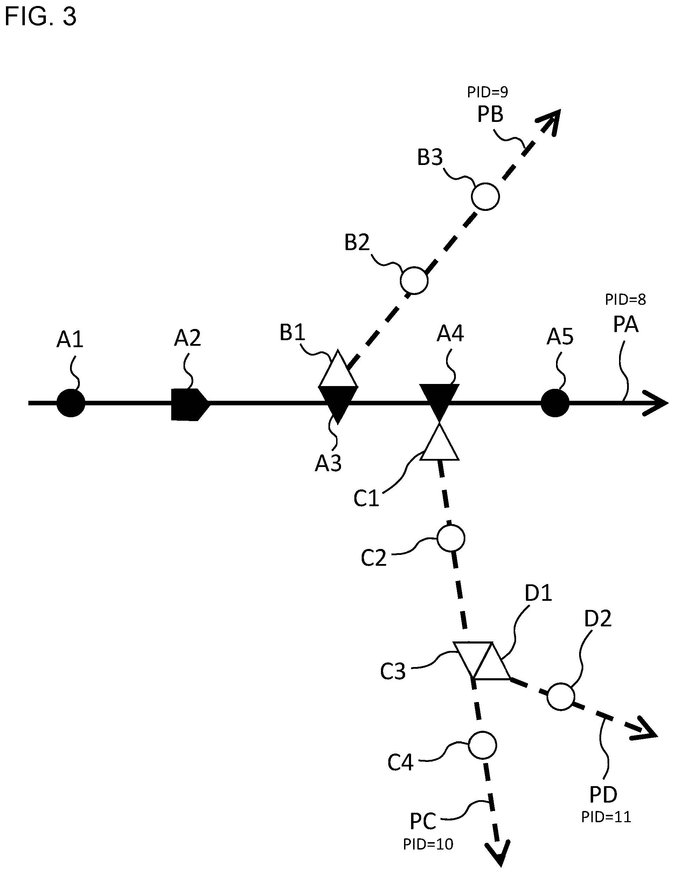

Based on the path information shown in Table 1, the route information management unit 330 can construct the road network having the topology shown in Fig. 3. Fig. 3 is a diagram showing an example of a road network configured based on acquired path information.

In addition, the route information management unit 330 executes processing for deleting the path information stored in the route database 310 when the input unit 320 acquires the reroute request. For example, the route information management unit 330 acquires the path type of the path on which the vehicle was traveling at the timing when the input unit 320 acquired the reroute request or immediately before the timing. After that, the route information management unit 330 determines whether the path on which the vehicle was traveling is the main path or the sub path.

When it is determined that the vehicle is traveling on the main path, the route information management unit 330 determines whether or not there is a bifurcation from the main path to the sub path ahead along the traveling direction of the vehicle. Whether or not there is a bifurcation can be determined by referring to the path information stored in the route database 310 or the road network configured by the route information management unit 330.

If it is determined that there is no bifurcation from the main path to the sub path ahead along the traveling direction of the vehicle, the route information management unit 330 retains the path information stored in the route database 310 as is.

If it is determined that there is a bifurcation from the main path to the sub path ahead along the traveling direction of the vehicle, the route information management unit 330 executes the "deletion process for main path". Here, the "deletion process for main path" is a process of deleting from the route database 310 a path information relating to a point that is a predetermined distance or more away from the point where the bifurcation occurs in the traveling direction of the vehicle. The path information deleted by the "deletion process for the main path" is the path information about the main path and the path information about the sub path related to the bifurcation.

When it is determined that the vehicle has traveled on the sub path, the route information management unit 330 executes the "deletion process for sub path". Here, the "deletion process for sub path" is a process of deleting from the route database 310 a path information relating to a point that is at least a predetermined distance away from the starting point of the sub path in the traveling direction of the vehicle. The path information deleted by the "deletion process for sub path" is the path information related to the sub path and the path information related to the bifurcation source path of the sub path.

In addition, the route information management unit 330 initializes the route database 310 when it cannot be determined whether the path on which the vehicle is traveling is the main path or the sub path. That is, the route information management unit 330 deletes all path information stored in the route database 310.

The output unit 340 outputs information about the target road network configured by the route information management unit 330. For example, the output unit 340 may output a driving route corresponding to the target road network, or may output high-precision map data along the driving route. In addition, the output unit 340 may transmit the extracted driving route and the high-precision map data along the extracted driving route to the vehicle control device 400.

### [Deletion process of path information]

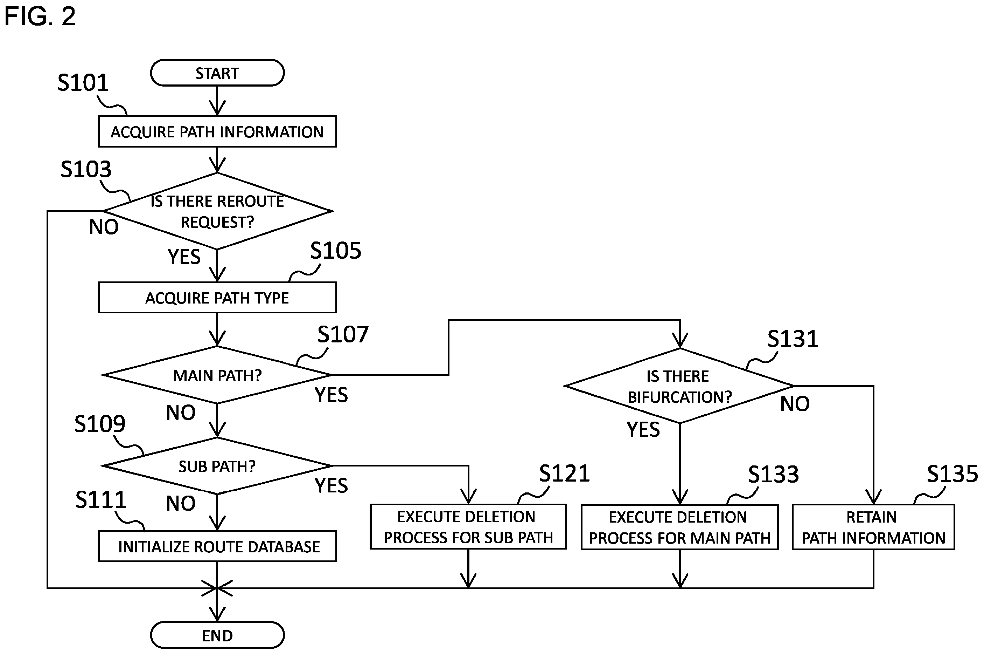

Next, deletion process of path information executed in the route information management unit 330 will be described with reference to Fig. 2. Fig. 2 is a flowchart showing deletion process in the information processing device according to this embodiment. Note that the check process shown in Fig. 2 may be repeatedly executed at a predetermined cycle.

In step S101, the input unit 320 acquires the path information and the reroute request from the navigation device 200. Here, the data inspection unit 325 may inspect the consistency of the acquired path information.

In step S103, the route information management unit 330 determines whether or not the reroute request has been made. If there is no reroute request (NO in step S103), the check process shown in Fig. 2 ends.

If there is the reroute request (YES in step S103), in step S105, the route information management unit 330 acquires the path type of the path on which the vehicle was traveling at the timing when the input unit 320 acquired the reroute request or immediately before the timing.

In step S107, the route information management unit 330 determines whether or not the path on which the vehicle was traveling is the main path (first path) based on the path type.

If it is determined that the vehicle is traveling on the main path (YES in step S107), in step S131, it is determined whether or not there is a bifurcation from the main path to the sub path ahead along the traveling direction of the vehicle.

If it is determined that there is no bifurcation from the main path to the sub path ahead along the traveling direction of the vehicle (NO in step S131), in step S135, the route information management unit 330 retains the path information stored in the route database 310 as is.

If it is determined that there is a bifurcation from the main path to the sub path ahead along the traveling direction of the vehicle (YES in step S131), in step S133, the route information management unit 330 executes "deletion process for main path ".

If it is not determined that the vehicle was traveling on the main path (NO in step S107), in step S109, the route information management unit 330 determines whether or not the path along which the vehicle was traveling is the sub path based on the path type (second path).

If it is determined that the vehicle is traveling on the sub path (YES in step S109), the route information management unit 330 executes "deletion process for sub path" in step S121.

If it is not determined that the vehicle is traveling on the sub path (NO in step S109), the route information management unit 330 initializes the route database 310 in step S111. That is, when it cannot be determined whether the path on which the vehicle is traveling is the main path or the sub path, the route information management unit 330 initializes the route database 310.

After the processing of steps S111, S121, S133, and S135, the processing shown in Fig. 2 ends.

### [Specific example of deletion process of path information]

Next, a specific example of deletion process of path information will be described.

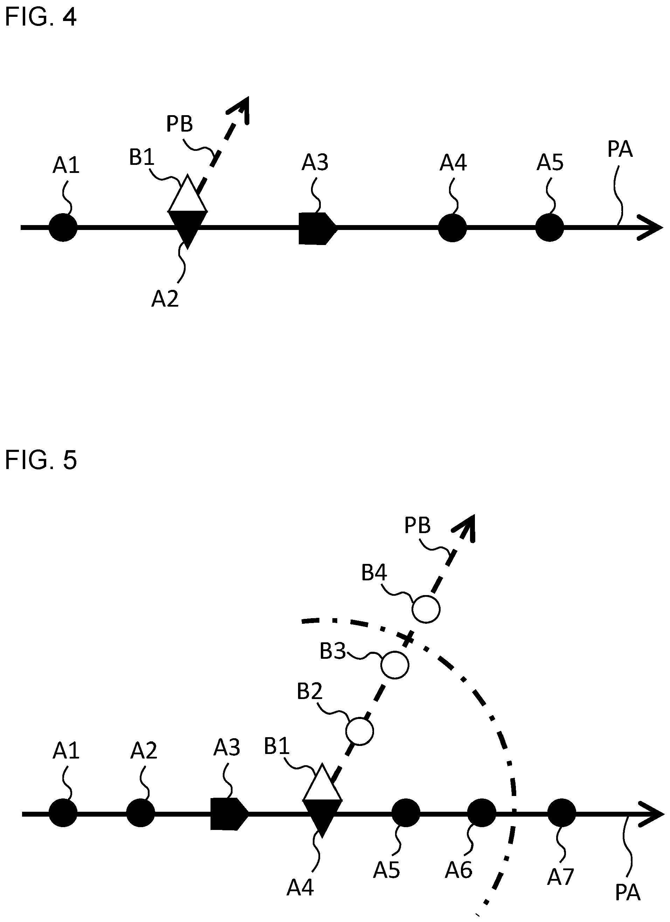

A case where the path information is retained in step S135 of the process shown in Fig. 2 will be described with reference to Fig. 4. Fig. 4 is a diagram showing an example in which path information is retained at the time of reroute.

For example, the path information shown in Table 2 is stored in the route database 310, corresponding to the road network shown in Fig. 4.

**[Table 2]**

| INDEX | PID | path type | OFFSET | bifurcation destination PID | road information (hands-off) | type of path information |
|---|---|---|---|---|---|---|
| A1 | 8 | MAIN | 0 | - | OK | road information |
| A2 | 8 | MAIN | 100 | 9 | OK | bifurcation information (source) |
| A3 | 8 | MAIN | 200 | - | OK | position information |
| A4 | 8 | MAIN | 300 | - | OK | road information |
| A5 | 8 | MAIN | 400 | - | OK | road information |
| B1 | 9 | SUB | 0 | - | OK | bifurcation information (destination) |

Referring to Table 2, it can be seen that the route database 310 stores the position information with "INDEX=A3, path type=MAIN, OFFSET=200". Here, no bifurcation information exists in the path information with OFFSET greater than 200 among the path information with PID=8. Therefore, the example of Fig. 4 corresponds to a case where it is determined that the path on which the vehicle travels (target path) is the main path and that there is no bifurcation from the main path to the sub path ahead along the traveling direction of the vehicle.

In such a case, there is no bifurcation ahead of the vehicle in the traveling direction, so there is a high possibility that the vehicle will travel on the main path even after the reroute. By retaining the path information about the main path as it is, it is possible to suppress the interruption of the autonomous driving control of the vehicle. Therefore, under the viewpoint of suppressing interruption of autonomous driving control of the vehicle, if it is determined that there is no bifurcation from the main path to the sub path ahead along the traveling direction of the vehicle, the route information management unit 330 retains the path information regarding the main path.

A case where the path information is deleted by the deletion process for the main path in step S133 of the process shown in Fig. 2 will be described with reference to Fig. 5. Fig. 5 is a diagram showing an example in which path information is deleted by deletion process for main path at the time of reroute.

For example, the path information shown in Table 3 is stored in the route database 310, corresponding to the road network shown in Fig. 5.

**[Table 3]**

| INDEX | PID | path type | OFFSET | bifurcation destination PID | road information (hands-off) | type of path information |
|---|---|---|---|---|---|---|
| A1 | 8 | MAIN | 0 | | OK | road information |
| A2 | 8 | MAIN | 100 | - | OK | road information |
| A3 | 8 | MAIN | 200 | - | OK | position information |
| A4 | 8 | MAIN | 400 | 9 | OK | bifurcation information (source) |
| A5 | 8 | MAIN | 600 | - | OK | road information |
| A6 | 8 | MAIN | 800 | - | OK | road information |
| A7 | 8 | MAIN | 1000 | - | OK | road information |
| B1 | 9 | SUB | 0 | - | OK | bifurcation information (destination) |
| B2 | 9 | SUB | 200 | - | OK | road information |
| B3 | 9 | SUB | 400 | - | OK | road information |
| B4 | 9 | SUB | 600 | - | OK | road information |

Referring to Table 3, it can be seen that the route database 310 stores the position information with "INDEX=A3, path type=MAIN, OFFSET=200". Among the path information with PID=8, the bifurcation information with "INDEX=A4, path type=MAIN, OFFSET=400" exists in the path information with OFFSET greater than 200. Therefore, the example of Fig. 5 corresponds to a case where it is determined that the path on which the vehicle travels (target path) is the main path, and that there is a bifurcation from the main path to the sub path ahead along the traveling direction of the vehicle.

In such a case, since there is a bifurcation ahead in the traveling direction of the vehicle, it is unclear whether the vehicle will travel on the main path or the sub path after the reroute. Therefore, it is not highly necessary to retain the path information about the main path as it is. On the other hand, there is a need to acquire path information about sub path again. Therefore, under the viewpoint of suppressing the interruption of the autonomous driving control of the vehicle, the path information regarding the points separated by a predetermined distance or more in the traveling direction of the vehicle from the point where the bifurcation occurs is deleted from the route database 310. On the other hand, the path information relating to points separated by a distance less than the predetermined distance is retained as it is.

For example, the path information whose OFFSET is larger than the path information of "INDEX=A4" by a predetermined size or more is deleted. In the example of Fig. 5, the predetermined size is set to "500" and the path information of "INDEX=A7" is deleted. Also, the path information whose OFFSET is larger than the path information of "INDEX=B1" by a predetermined size or more is deleted. In the example of Fig. 5, the path information of "INDEX=B4" is deleted.

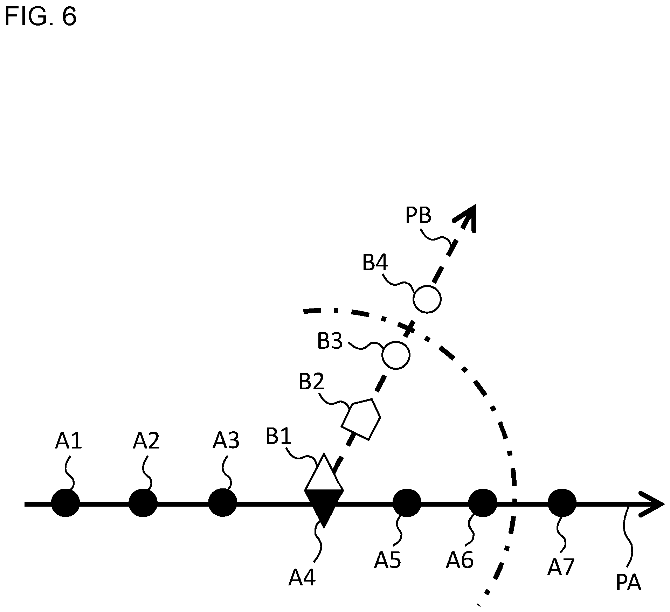

A case where the path information is deleted by deletion process for sub path in step S121 of the process shown in Fig. 2 will be described with reference to Fig. 6. Fig. 6 is a diagram showing an example in which path information is deleted by deletion process for sub path at the time of reroute.

For example, the path information shown in Table 4 is stored in the route database 310, corresponding to the road network shown in Fig. 6.

**[Table 4]**

| INDEX | PID | path type | OFFSET | bifurcation destination PID | road information (hands-off) | type of path information |
|---|---|---|---|---|---|---|
| A1 | 8 | MAIN | 0 | - | OK | road information |
| A2 | 8 | MAIN | 100 | - | OK | road information |
| A3 | 8 | MAIN | 200 | - | OK | road information |
| A4 | 8 | MAIN | 400 | 9 | OK | bifurcation information (source) |
| A5 | 8 | MAIN | 600 | - | OK | road information |
| A6 | 8 | MAIN | 800 | - | OK | road information |
| A7 | 8 | MAIN | 1000 | - | OK | road information |
| B1 | 9 | SUB | 0 | - | OK | bifurcation information (destination) |
| B2 | 9 | SUB | 200 | - | OK | position information |
| B3 | 9 | SUB | 400 | - | OK | road information |
| B4 | 9 | SUB | 600 | - | OK | road information |

Referring to Table 4, it can be seen that the route database 310 stores the position information with "INDEX=B2, path type=SUB, OFFSET=200". Therefore, the example of Fig. 5 corresponds to a case where it is determined that the path on which the vehicle travels (target path) is the sub path.

In such a case, it is unclear which of the sub path and the bifurcation source path of the sub path (the main path in the example of Table 4) the vehicle will travel after the reroute. Therefore, under the viewpoint of suppressing the interruption of the autonomous driving control of the vehicle, the path information regarding points that are more than a predetermined distance apart in the traveling direction of the vehicle is deleted from the route database 310, starting from the point where the sub path bifurcates from the bifurcation source path of the sub path where the vehicle is located. On the other hand, the path information relating to points separated by a distance less than the predetermined distance is retained as it is.

For example, the path information whose OFFSET is larger than the path information of "INDEX=A4" by a predetermined size or more is deleted. In the example of Fig. 6, the predetermined size is set to "500" and the path information of "INDEX=A7" is deleted. Also, the path information whose OFFSET is larger than the path information of "INDEX=B1" by a predetermined size or more is deleted. In the example of Fig. 6, the path information of "INDEX=B4" is deleted.

### [Effects of the embodiments]

As explained in detail above, an information processing method and an information processing device, according to the present embodiment, acquire a path information on a path included in a road network set on a map data,
acquire a reroute request indicating an instruction to regenerate a route when generating the route that a vehicle is scheduled to travel in correspondence with the road network based on the path information stored in the database,
acquire a path type indicating whether a target path on which the vehicle is traveling at a timing when the reroute request is acquired is a first path or a second path bifurcating from the first path, included in the road network, and
delete the path information stored in the database based on the path type.

As a result, even when a reroute to generate a new traveling route is started by a navigation device, interruption of autonomous driving control of a vehicle can be suppressed. In particular, even in a state before the reroute is started and the reroute is completed, the path information stored in the database before the reroute can be used to suppress interruption of the autonomous driving control of the vehicle. Furthermore, the amount of communication with the navigation device that outputs the path information can be reduced, and the computational load can be suppressed.

Further, the information processing method and information processing device, according to the present embodiment, may determine whether or not there is a target bifurcation to the second path ahead along a traveling direction of the vehicle, if it is determined that the target path is the first path based on the path type, and may delete the path information stored in the database regarding the first path and the second path at a point spaced forward along the traveling direction of the vehicle by a predetermined distance or more from the point where the second path bifurcates from the first path, if there is the target bifurcation.

As a result, even if it is unclear whether the vehicle will travel on the first path or the second path after the reroute, the path information stored in the database before the reroute is used to suppress interruption of the autonomous driving control of the vehicle. On the other hand, the path information that needs to be updated due to the reroute can be deleted, and the route along which the vehicle is scheduled to travel after the reroute can be generated in correspondence with the road network.

Furthermore, the information processing method and information processing device, according to the present embodiment, may determine whether or not there is a target bifurcation to the second path ahead along the traveling direction of the vehicle, if it is determined that the target path is the first path based on the path type, and may not delete the path information stored in the database, if there is not the target bifurcation.

This makes it possible to detect situations in which the vehicle is likely to travel on the same first path before and after the reroute. As a result, the path information stored in the database before the reroute can be used to suppress interruption of the autonomous driving control of the vehicle. Furthermore, since there is no need to acquire the path information again, the amount of communication with the navigation device that outputs the path information can be reduced, and the computational load can be suppressed.

Further, the information processing method and information processing device, according to the present embodiment, may delete the path information stored in the database regarding the first path or the second path at a point spaced forward along the traveling direction of the vehicle by a predetermined distance or more from the point where the second path bifurcates from the first path, if it is determined that the target path is the second path based on the path type.

As a result, even if it is unclear whether the vehicle will travel on the first path or the second path after the reroute, the path information stored in the database before the reroute is used to suppress interruption of the autonomous driving control of the vehicle. On the other hand, the path information that needs to be updated due to the reroute can be deleted, and the route along which the vehicle is scheduled to travel after the reroute can be generated in correspondence with the road network.

Furthermore, the information processing method and information processing device, according to the present embodiment, may set the predetermined distance larger as a traveling speed of the vehicle is greater. As a result, even at the time of reroute, there is no possibility that the route along which the vehicle is scheduled to travel within a predetermined range from the position of the vehicle is generated again. Thus, interruption of the autonomous driving control of the vehicle can be suppressed.

Further, the information processing method and information processing device, according to the present embodiment, may delete all the path information stored in the database if it is determined that the target path does not correspond to either the first path or the second path based on the path type. As a result, a route on which the vehicle is scheduled to travel can be generated in correspondence with the road network without contradiction, by acquiring new path information. In particular, when it is unclear whether the target path corresponds to the first path or the second path, it is conceivable that the autonomous driving control of the vehicle must be interrupted. In such a case, the database can be initialized, and the path information can be acquired again.

Furthermore, in the information processing method and information processing device, according to the present embodiment, the first path may be longer than the second path. As a result, the route along which the vehicle is most likely to travel can be more reliably generated in correspondence with the road network. Thus, interruption of the autonomous driving control of the vehicle can be suppressed.

Further, in the information processing method and information processing device, according to the present embodiment, the road network may be set by a navigation device, and the path information may be transmitted by the navigation device. Thus, by generating a traveling route based on map data with low accuracy, it is possible to reduce the calculation load at the time of route selection and at the time of reroute. In addition, it is possible to realize efficient driving route generation on high-precision map data having higher precision than map data, in order to reduce the calculation load at the time of route selection and at the time of reroute.

Furthermore, in the information processing method and information processing device, according to the present embodiment, the path information may be acquired by communication based on a protocol defined in Advanced Driver Assistance Systems Interface Specifications (ADASIS). This makes it possible to use standardized specifications, and as a result, it is possible to reduce the design cost and procurement cost of the components that make up the system.

Further, the information processing method and information processing device, according to the present embodiment, may generate a driving route for the vehicle on map data having higher accuracy than the map data based on the path information stored in the database. As a result, it is possible to start controlling the vehicle based on the highly accurate driving route on the high-precision map data. Furthermore, even if the user of the vehicle does not focus on driving the vehicle, it is possible to expand the range in which the vehicle can be driven.

Furthermore, the information processing method and information processing device, according to the present embodiment, may transmit the generated driving route to a control unit that autonomously controls traveling of the vehicle. As a result, it is possible to start controlling the vehicle based on the highly accurate driving route on the high-precision map data. Furthermore, even if the user of the vehicle does not focus on driving the vehicle, it is possible to expand the range in which the vehicle can be driven.

Respective functions described in the above embodiment may be implemented by one or plural processing circuits. The processing circuits include programmed processors, electrical circuits, etc., as well as devices such as application specific integrated circuits (ASIC) and circuit components arranged to perform the described functions, etc.

Although the contents of the present invention have been described above with reference to the embodiment, the present invention is not limited to these descriptions, and it will be apparent to those skilled in the art that various modifications and improvements can be made. It should not be construed that the present invention is limited to the descriptions and the drawings that constitute a part of the present disclosure. Based on the present disclosure, various alternative embodiments, practical examples, and operating techniques will be apparent to those skilled in the art. Accordingly, the present invention also includes various embodiments that are not described herein. The matter for which protection is sought is defined by the appended claims.

### REFERENCE SIGNS LIST

- 200: navigation device
- 210: map database
- 220: vehicle position calculation unit
- 230: route generation unit
- 240: state determination unit
- 250: output unit
- 300: information processing device
- 310: route database
- 320: input unit
- 325: data inspection unit
- 330: route information management unit
- 340: output unit
- 400: vehicle control device

## Claims

1. An information processing method for acquiring a path information on a path included in a road network set on a map data, and generating a route that a vehicle is scheduled to travel in correspondence with the road network based on the path information stored in a database (310), comprising:
acquiring a reroute request indicating an instruction to regenerate the route,
acquiring a path type indicating whether a target path on which the vehicle is traveling among the path at a timing when the reroute request is acquired is a first path or a second path bifurcating from the first path, included in the road network,
determining whether or not there is a target bifurcation to the second path ahead along a traveling direction of the vehicle, if it is determined that the target path is the first path based on the path type, and
deleting the path information stored in the database (310) regarding the first path and the second path at a point spaced forward along the traveling direction of the vehicle by a predetermined distance or more from the point where the second path bifurcates from the first path, if there is the target bifurcation.

2. The information processing method according to claim 1, further comprising
not deleting the path information stored in the database (310), if there is not the target bifurcation.

3. The information processing method according to claim 1 or 2, comprising
deleting the path information stored in the database (310) regarding the first path and the second path at a point spaced forward along the traveling direction of the vehicle by a predetermined distance or more from the point where the second path bifurcates from the first path, if it is determined that the target path is the second path based on the path type.

4. The information processing method according to any one of claims 1 to 3, comprising
setting the predetermined distance larger as a traveling speed of the vehicle is greater.

5. The information processing method according to any one of claims 1 to 4, comprising
if it is determined that the target path does not correspond to either the first path or the second path based on the path type, deleting all the path information stored in the database (310).

6. The information processing method according to any one of claims 1 to 5, wherein
the first path is longer than the second path.

7. The information processing method according to any one of claims 1 to 6, wherein
the road network is set by a navigation device, and the path information is transmitted by the navigation device.

8. The information processing method according to any one of claims 1 to 7, wherein
the path information is acquired by communication based on a protocol defined in Advanced Driver Assistance Systems Interface Specifications (ADASIS).

9. The information processing method according to any one of claims 1 to 8, comprising
generating a driving route for the vehicle on map data having higher accuracy than the map data based on the path information stored in the database (310).

10. The information processing method according to claim 9, comprising
transmitting the generated driving route to a control unit that autonomously controls traveling of the vehicle.

11. An information processing device comprising
an input unit configured to receive a path information on a path included in a road network set on a map data,
a database (310) configured to store the path information, and
a controller (330) configured to when generating a route that a vehicle is scheduled to travel in correspondence with the road network based on the path information stored in the database (310),
acquire a reroute request indicating an instruction to regenerate the route,
acquire a path type indicating whether a target path on which the vehicle is traveling among the path at a timing when the reroute request is acquired is a first path or a second path bifurcating from the first path, included in the road network,
determine whether or not there is a target bifurcation to the second path ahead along a traveling direction of the vehicle, if it is determined that the target path is the first path based on the path type, and
delete the path information stored in the database (310) regarding the first path and the second path at a point spaced forward along the traveling direction of the vehicle by a predetermined distance or more from the point where the second path bifurcates from the first path, if there is the target bifurcation.

12. A computer program comprising a program code that performs the information processing method according to any one of claims 1 to 10, when the computer program is executed on one or more computers.

## Patentansprüche

1. Informationsverarbeitungsverfahren zum Erfassen von Pfadinformationen über einen Pfad, der in einem auf Kartendaten festgelegten Straßennetz enthalten ist, und Generieren einer Route, auf der ein Fahrzeug planmäßig fahren soll, entsprechend dem Straßennetz basierend auf den in einer Datenbank (310) gespeicherten Pfadinformationen, umfassend:
Erfassen einer Umleitungsanforderung, die eine Anweisung zum Neugenerieren der Route angibt,
Erfassen eines Pfadtyps, der angibt, ob ein Zielpfad, auf dem das Fahrzeug innerhalb des Pfads zu einem Zeitpunkt fährt, zu dem die Umleitungsanforderung erfasst wird, ein erster Pfad oder ein zweiter Pfad ist, der von dem ersten Pfad abzweigt, der in dem Straßennetz enthalten ist,
Bestimmen, ob eine Zielabzweigung zu dem zweiten Pfad in Vorwärtsrichtung entlang einer Fahrtrichtung des Fahrzeugs vorhanden ist oder nicht, falls basierend auf dem Pfadtyp bestimmt wird, dass der Zielpfad der erste Pfad ist, und
Löschen der in der Datenbank (310) gespeicherten Pfadinformationen in Bezug auf den ersten Pfad und den zweiten Pfad an einem Punkt, der entlang der Fahrtrichtung des Fahrzeugs um eine vorbestimmte Entfernung oder mehr vor dem Punkt, an dem der zweite Pfad von dem ersten Pfad abzweigt, beabstandet ist, falls die Zielabzweigung vorhanden ist.

2. Informationsverarbeitungsverfahren nach Anspruch 1, das ferner Folgendes umfasst
nicht Löschen der in der Datenbank (310) gespeicherten Pfadinformationen, falls keine Zielabzweigung vorhanden ist.

3. Informationsverarbeitungsverfahren nach Anspruch 1 oder 2, das Folgendes umfasst
Löschen der in der Datenbank (310) gespeicherten Pfadinformationen in Bezug auf den ersten Pfad und den zweiten Pfad an einem Punkt, der entlang der Fahrtrichtung des Fahrzeugs um eine vorbestimmte Entfernung oder mehr vor dem Punkt, an dem der zweite Pfad von dem ersten Pfad abzweigt, beabstandet ist, falls basierend auf dem Pfadtyp bestimmt wird, dass der Zielpfad der zweite Pfad ist.

4. Informationsverarbeitungsverfahren nach einem der Ansprüche 1 bis 3, das Folgendes umfasst
Festlegen der vorbestimmten Entfernung als größer, wenn eine Fahrgeschwindigkeit des Fahrzeugs größer ist.

5. Informationsverarbeitungsverfahren nach einem der Ansprüche 1 bis 4, das Folgendes umfasst
falls basierend auf dem Pfadtyp bestimmt wird, dass der Zielpfad weder dem ersten Pfad noch dem zweiten Pfad entspricht, Löschen aller in der Datenbank (310) gespeicherten Pfadinformationen.

6. Informationsverarbeitungsverfahren nach einem der Ansprüche 1 bis 5, wobei
der erste Pfad länger als der zweite Pfad ist.

7. Informationsverarbeitungsverfahren nach einem der Ansprüche 1 bis 6, wobei
das Straßennetz durch eine Navigationsvorrichtung festgelegt wird und die Pfadinformationen durch die Navigationsvorrichtung übertragen werden.

8. Informationsverarbeitungsverfahren nach einem der Ansprüche 1 bis 7, wobei
die Pfadinformationen durch eine Kommunikation basierend auf einem Protokoll erfasst werden, das in Advanced Driver Assistance Systems Interface Specifications (ADASIS) definiert ist.

9. Informationsverarbeitungsverfahren nach einem der Ansprüche 1 bis 8, das Folgendes umfasst
Generieren einer Fahrtroute für das Fahrzeug auf Kartendaten, die eine höhere Genauigkeit aufweisen als die Kartendaten, die auf den in der Datenbank (310) gespeicherten Pfadinformationen basieren.

10. Informationsverarbeitungsverfahren nach Anspruch 9, das Folgendes umfasst
Übertragen der generierten Fahrtroute an eine Steuereinheit, die eine Fahrt des Fahrzeugs autonom steuert.

11. Informationsverarbeitungsvorrichtung, die Folgendes umfasst
eine Eingabeeinheit, die dazu ausgelegt ist, Pfadinformationen über einen Pfad zu empfangen, der in einem auf Kartendaten festgelegten Straßennetz enthalten ist,
eine Datenbank (310), die dazu ausgelegt ist, die Pfadinformationen zu speichern, und
eine Steuerung (330), die bei Generieren einer Route, auf der ein Fahrzeug planmäßig fahren soll, entsprechend dem Straßennetz basierend auf den in der Datenbank (310) gespeicherten Pfadinformationen zu Folgendem ausgelegt ist,
Erfassen einer Umleitungsanforderung, die eine Anweisung zum Neugenerieren der Route angibt,
Erfassen eines Pfadtyps, der angibt, ob ein Zielpfad, auf dem das Fahrzeug innerhalb des Pfads zu einem Zeitpunkt fährt, zu dem die Umleitungsanforderung erfasst wird, ein erster Pfad oder ein zweiter Pfad ist, der von dem ersten Pfad abzweigt, der in dem Straßennetz enthalten ist,
Bestimmen, ob eine Zielabzweigung zu dem zweiten Pfad in Vorwärtsrichtung entlang einer Fahrtrichtung des Fahrzeugs vorhanden ist oder nicht, falls basierend auf dem Pfadtyp bestimmt wird, dass der Zielpfad der erste Pfad ist, und
Löschen der in der Datenbank (310) gespeicherten Pfadinformationen in Bezug auf den ersten Pfad und den zweiten Pfad an einem Punkt, der entlang der Fahrtrichtung des Fahrzeugs um eine vorbestimmte Entfernung oder mehr vor dem Punkt, an dem der zweite Pfad von dem ersten Pfad abzweigt, beabstandet ist, falls die Zielabzweigung vorhanden ist.

12. Computerprogramm, das einen Programmcode umfasst, der das Informationsverarbeitungsverfahren nach einem der Ansprüche 1 bis 10 durchführt, wenn das Computerprogramm auf einem oder mehreren Computern ausgeführt wird.

## Revendications

1. Procédé de traitement d'informations pour acquérir des informations de chemin sur un chemin inclus dans un réseau routier défini sur des données cartographiques, et générer un itinéraire qu'un véhicule doit parcourir en conformité avec le réseau routier sur la base des informations de chemin stockées dans une base de données (310), comprenant :
l'acquisition d'une requête de recalcul d'itinéraire indiquant une instruction de régénération de l'itinéraire,
l'acquisition d'un type de chemin indiquant si, au moment où la requête de recalcul d'itinéraire est acquise, le chemin cible sur lequel le véhicule circule parmi les chemins inclus dans le réseau routier est un premier chemin ou un second chemin bifurquant à partir du premier chemin,
la détermination de l'existence ou de l'absence d'une bifurcation cible vers le second chemin en aval, le long de la direction de déplacement du véhicule, s'il est déterminé sur la base du type de chemin que le chemin cible est le premier chemin, et
la suppression des informations de chemin stockées dans la base de données (310) concernant le premier chemin et le second chemin en un point espacé en aval, le long de la direction de déplacement du véhicule, à une distance prédéterminée ou plus du point où le second chemin bifurque à partir du premier chemin, si la bifurcation cible existe.

2. Procédé de traitement d'informations selon la revendication 1, comprenant en outre :
la non-suppression des informations de chemin stockées dans la base de données (310), si la bifurcation cible n'existe pas.

3. Procédé de traitement d'informations selon la revendication 1 ou 2, comprenant :
la suppression des informations de chemin stockées dans la base de données (310) concernant le premier chemin et le second chemin en un point espacé en aval, le long de la direction de déplacement du véhicule, à une distance prédéterminée ou plus du point où le second chemin bifurque à partir du premier chemin, s'il est déterminé sur la base du type de chemin que le chemin cible est le second chemin.

4. Procédé de traitement d'informations selon l'une quelconque des revendications 1 à 3, comprenant :
l'augmentation de la distance prédéterminée à mesure que la vitesse de déplacement du véhicule augmente.

5. Procédé de traitement d'informations selon l'une quelconque des revendications 1 à 4, comprenant :
s'il est déterminé sur la base du type de chemin que le chemin cible ne correspond ni au premier chemin ni au second chemin, la suppression de toutes les informations de chemin stockées dans la base de données (310).

6. Procédé de traitement d'informations selon l'une quelconque des revendications 1 à 5, dans lequel :
le premier chemin est plus long que le second chemin.

7. Procédé de traitement d'informations selon l'une quelconque des revendications 1 à 6, dans lequel :
le réseau routier est défini par un dispositif de navigation, et les informations de chemin sont transmises par le dispositif de navigation.

8. Procédé de traitement d'informations selon l'une quelconque des revendications 1 à 7, dans lequel :
les informations de chemin sont acquises par communication sur la base d'un protocole défini dans les spécifications d'interface des systèmes avancés d'aide à la conduite (ADASIS).

9. Procédé de traitement d'informations selon l'une quelconque des revendications 1 à 8, comprenant :
la génération d'un itinéraire de conduite pour le véhicule sur des données cartographiques ayant une précision supérieure à celle des données cartographiques sur la base des informations de chemin stockées dans la base de données (310).

10. Procédé de traitement d'informations selon la revendication 9, comprenant :
la transmission de l'itinéraire de conduite généré à une unité de commande qui contrôle de manière autonome le déplacement du véhicule.

11. Dispositif de traitement d'informations comprenant :
une unité d'entrée configurée pour recevoir des informations de chemin concernant un chemin inclus dans un réseau routier défini sur des données cartographiques,
une base de données (310) configurée pour stocker les informations de chemin, et
un contrôleur (330) configuré pour, lors de la génération d'un itinéraire que doit parcourir un véhicule en conformité avec le réseau routier sur la base des informations de chemin stockées dans la base de données (310),
acquérir une requête de recalcul d'itinéraire indiquant une instruction de régénération de l'itinéraire,
acquérir un type de chemin indiquant si, au moment où la requête de recalcul d'itinéraire est acquise, le chemin cible sur lequel le véhicule circule parmi les chemins inclus dans le réseau routier est un premier chemin ou un second chemin bifurquant à partir du premier chemin,
déterminer s'il existe ou non une bifurcation cible vers le second chemin en aval, le long de la direction de déplacement du véhicule, s'il est déterminé sur la base du type de chemin que le chemin cible est le premier chemin, et
supprimer les informations de chemin stockées dans la base de données (310) concernant le premier chemin et le second chemin en un point espacé en aval, le long de la direction de déplacement du véhicule, à une distance prédéterminée ou plus du point où le second chemin bifurque à partir du premier chemin, si la bifurcation ciblée existe.

12. Programme informatique comprenant un code de programme qui exécute le procédé de traitement d'informations selon l'une quelconque des revendications 1 à 10, lorsque le programme informatique est exécuté sur un ou plusieurs ordinateurs.
